# EUROPEAN PATENT SPECIFICATION

(11) **EP 3 533 990 B1**
(45) Date of publication and mention of the grant of the patent: **10.07.2024**
(21) Application number: 18290016.7
(22) Date of filing: 28.02.2018
(51) Int. Cl.: F02M 35/022, F02M 35/02, F02M 26/35, B01D 5/00, F02M 35/10

(54) **TUBULAR CONDENSATE SEPARATOR**
ROHRFÖRMIGER KONDENSATABSCHEIDER
SÉPARATEUR DE CONDENSAT TUBULAIRE

(43) Date of publication of application: 04.09.2019
(73) Proprietor: MANN+HUMMEL GmbH, 71636 Ludwigsburg (DE)
(72) Inventor: Ratajczack, Christelle, 53260 Forcé (FR); De Cara, Gerald, 53150 Montsurs (FR)
(74) Representative: Mann + Hummel Intellectual Property

(56) References cited:
- EP-A1- 1 724 453
- EP-A2- 2 644 874
- DE-A1- 102006 027 358
- JP-A- 2012 207 633
- JP-A- 2013 029 081
- JP-A- H07 238 870
- US-A1- 2013 220 457

## Description

### Technical field

The present invention refers to a separator for separating a condensate, in particular water droplets, from a gas, in particular air.

### Background

The cooling of gases is often accompanied by the formation of condensates. Condensates can cause damages to the respective technical systems, e.g. different parts of vehicle engines, such as compressors. Therefore, it is often necessary to drain off the condensates.

JP 2013-29081 A reveals a system for collecting and storing condensed water. The condensed water is generated during the cooling of gases in exhaust gas recirculation (EGR) processes. Grooves are formed in a horizontally aligned pipe which is fluidically arranged behind a cooler for EGR gases. The water is separated at the grooves and moved along the grooves by the gas flow. Through a vertical pipe, the water flows from the grooves into a collecting tank located underneath the horizontal pipe through the action of gravity.

DE 10 2006 027 358 A1 reveals an intake pipe of an internal combustion engine for air. The intake pipe has a drain at its lowest point. In the area of the drain, folds are arranged as in a bellows. The water is separated off at the folds and directed to a drain in the form of an opening. The water flows out of this drain under the effect of gravity. The drain has a cover so that the separated water at the drain is not carried away by the air flow.

DE 10 2006 027358 A1 discloses a suction pipe having a diverting part and an inner wall surface on the suction pipe connecting to the diverting part, i.e. concave and convex areas in sections on a peripheral side for a shape that does not restrict an open pipe cross-section compared to adjacent pipe sections in the suction pipe. It further discloses an internal combustion engine in a motor vehicle with a suction pipe and a filter element connected in the suction pipe's direction of flow.

From US 2013/220457 A1 a cold charge duct, a system and method are known for removing and controlling the reintroduction of a condensate in diesel or gasoline engine intake air. The duct may include an exterior wall which may define a passage configured to pass air from a turbocharger to an engine. The exterior wall may have one or more openings, and a separator formed to be substantially flush with an inner surface of the external wall. In this way, it is possible to utilize an edge-based separator to generate a sudden decrease in the flow rate thereby causing a water condensate to drop into the openings for later reintroduction into the engine.

JP2012207633A provides an EGR device including a contamination collection device capable of efficiently collecting contamination in exhaust gas and preventing decrease in collection properties due to deposition of soot or the like. A curved part is provided at a part of piping of the EGR device and a contamination collection device is provided at the curved part.

The separators disclosed in the abovementioned documents must be aligned horizontally, perpendicular to the gravitational force so that the water can flow out. Such separators cannot be used in technical systems, which require a vertical alignment of the separator due to the dimensions of the respective system.

It is an object of the invention to provide a compact condensate separator that is optimized to be mounted vertically.

This object is solved by a separator according to claim 1. The subjects of the dependent claims are preferred examples.

### Disclosure of the invention

In accordance with the invention, the aforementioned object is obtained by a tubular separator for separating a condensate from a gas which comprises a main tube having folds formed in the shape of a bellows. Furthermore, the separator encompasses an axial inner wall which forms a part of the main tube for leading the gas. The tubular separator is characterized by a flow channel for the condensate with a plurality of openings leading to the folds. The inner wall separates the flow channel from the main tube. The flow channel comprises an outer wall for leading the condensate in the axial direction of the flow channel. After impacting on the folds, fluid particles and droplets contained in the gas are separated from the gas and form a droplet or heap or a film of condensate. Within the folds the speed of the gas flow is very low or negligible. The condensate does not move with the gas flow, but can glide along the folds.

All indications of directions like "vertical", "horizontal" refer to the mounted separator.

Due to the axial alignment of the flow channel, the flow of the condensate through the flow channel after separation occurs in an antiparallel manner to the gas flow. Therefore, the separator is optimized for vertical alignment. Here, the expression vertical refers in particular to the flow direction of the gas opposite to the direction of the gravitational force. In this case, the condensate flows downwards through the flow channel due to the effect of gravity. Then it can flow out of the flow channel into a drainpipe. The separator can also be aligned with an inclination in relation to the vertical direction. In less preferred embodiments, the separator can be aligned in a horizontal direction. The separated condensate is first collected in the flow channel before flowing out of the separator. The diameter of the flow channel and the diameter of the drainpipe can therefore be chosen independently of the length of the main tube. Such a separator can be used, for example, in EGR systems of combustion engines, e.g. in EGR Systems of combustion engines of vehicles.

The inner wall can be connected to the outer wall by a connecting web, wherein in the radial direction the second wall is located at a greater distance than the inner wall. The inner wall and the outer wall are attached to each other by means of the connecting web in a simple way. The distance between the inner wall and the outer wall can be constant or variable.

The inner wall, the outer wall and the connecting web can be arranged in an H-shaped manner. This arrangement of the connecting web ensures a particularly high stability of the flow channel due to its stiffening. The flow channel is divided into two chambers by the connecting web as protection against leakage losses.

In another embodiment the inner wall can be a part of the inlet tube and extend into the main tube. In an advantageous embodiment the inner wall can be in-one-piece with the inlet tube.

In an advantage embodiment there is a gap between the inner wall and an end wall of the folds at least at one longitudinal side of the inner wall.

The inner wall can be connected to the end wall of the folds in the area of the inner wall. The condensate flows from the inner radial surface of the folds into the flow channel through openings.

Advantageously the inner wall is not connected to the outer wall of the flow channel by a connecting web when it is fixed at the folds or when it is part of the inlet tube.

According to the invention at least a part of the inner radial surface of the folds is arranged at a greater radial distance than the outer radial surface of the inner wall in the radial direction. Thus, the condensate can flow from the inner radial surface of the folds into the flow channel between the inner wall and the outer wall.

At least some of the folds can have an inclination with respect to the vertical direction, wherein the inner wall is located at the respective lowest points of the folds. In this case, the condensate can flow along the folds to the lowest points of the folds and the inner wall by the action of gravity.

The inner wall can be smooth. In particular, it can be flat, plane in the vertical direction. That way, parts of the condensate in the flow channel can easily flow down the inner wall.

The separator can comprise an inlet having an inlet tube leading to the main tube, wherein the inlet tube is bent. In the bend of the inlet tube, heavy fluid particles and droplets cannot follow the gas flow. By hitting the inner surface of the inlet tube, they can be separated from the gas.

A gap can be formed between the inlet tube and the inner wall. This can be advantageous for draining droplets which flow down the inner surface of the inner wall or hit the inner surface of the inlet tube and are moved further upwards with the gas flow along the inner surface of the inlet tube. The gap can be arranged in radial direction at a certain angle around the inlet tube, advantougly in an angle between 30° to 360°.

A final section of the inlet tube can protrude into the main tube in the axial direction. In this case, a part of the condensate can be separated from the inlet tube and the main tube in a defined manner before entering the main tube by appropriate design of the connection between the inlet tube and the main tube.

The inlet can have a drainpipe, which is fluidically connected to the flow channel, in particular by a collecting channel. This permits a compact design of the flow channel, inlet tube and outlet tube.

The flow channel and/or the inlet can form separate components of the separator. This allows flexible manufacturing methods of the components.

The separator can be formed by blow molding and/or injection molding. Blow molding and/or injection molding processes permit the forming of the hollow body of the main tube and the inlet tube.

### Brief description of drawings

Other advantages and features of the invention will be appreciated from the following description of embodiments of the invention with reference to the figures of the drawings, which show significant details, and from the claims.
- Fig. 1: shows an isometric view of a separator for separating a condensate from a gas from a first perspective;
- Fig. 2: shows an isometric view of a separator from a second perspective;
- Fig. 3: shows a cutaway view of the separator from a first perspective;
- Fig. 4: shows a cutaway view of the separator from a further perspective; and
- Fig. 5: shows a horizontal cross-section through a main tube of the separator.

### Detailed description

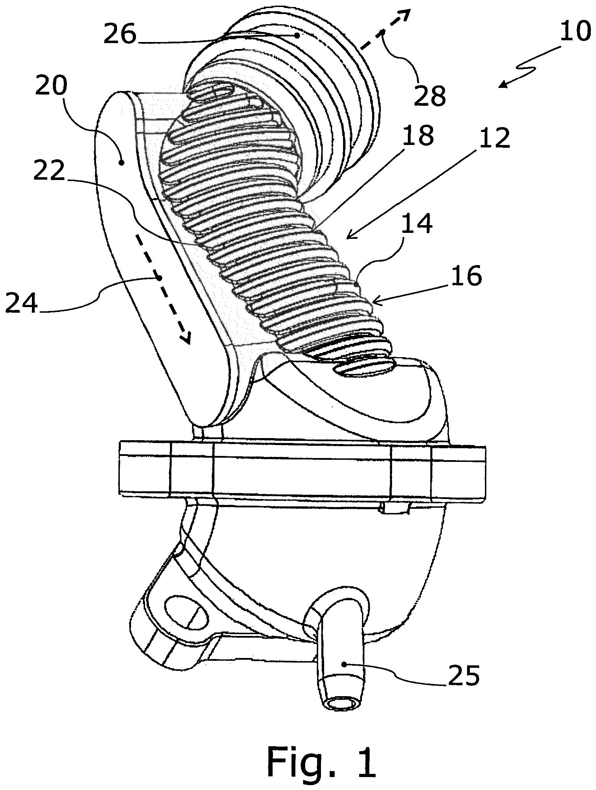

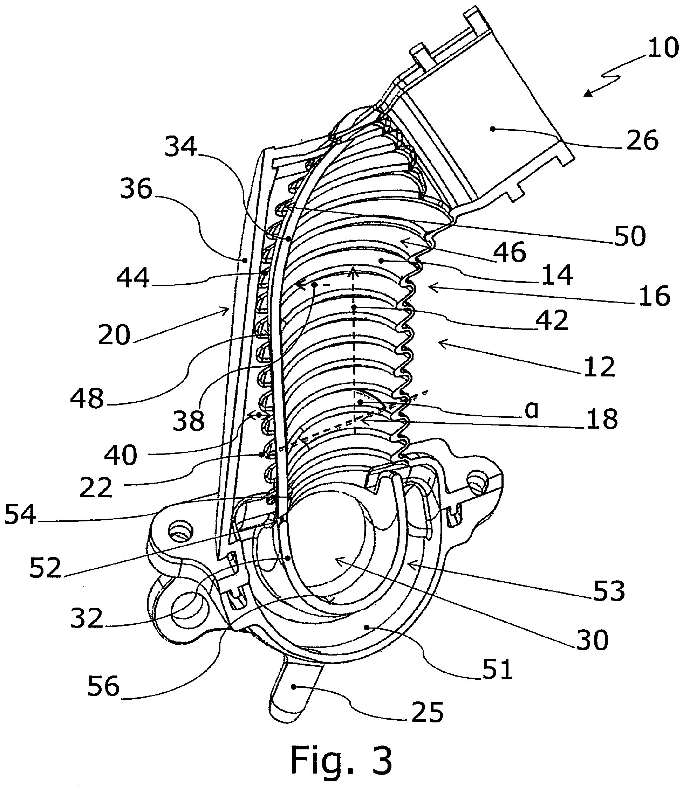

**Fig. 1** shows an isometric view of a separator **10** for separating a condensate from a gas, i.a. air. The separator comprises a main tube **12.** The main tube 12 encompasses folds **14** formed in the shape of a bellows **16.** The folds 14 are used for separating a condensate from the gas. The condensate can include fluid particles and droplets, e.g. water droplets, contained in the gas. On impact with the folds 14 the fluid particles and droplets are separated from the gas. The folds 14 are tilted. They have an inclination **18** with respect to the vertical direction. This inclination 18 is also shown in fig. 3. Within the folds 14, the velocity of the gas is very low compared to the one seen in the main tube 12. Therefore, the fluid particles and droplets flow along the folds 14 due to the effect of gravity. A flow channel **20** is located at the respective lowest points **22** of the folds 14. The droplets can enter the flow channel 20 through an opening (see fig. 3). In the flow channel 20, the droplets flow in the axial direction **24** antiparallel to the longitudinal axis of the flow channel 20 downwards to a drainpipe 25. At the end of the main tube 12 in the direction **28** of the gas flow an outlet **26** is located. The gas can flow out of the outlet 26 after the condensate is separated from the gas.

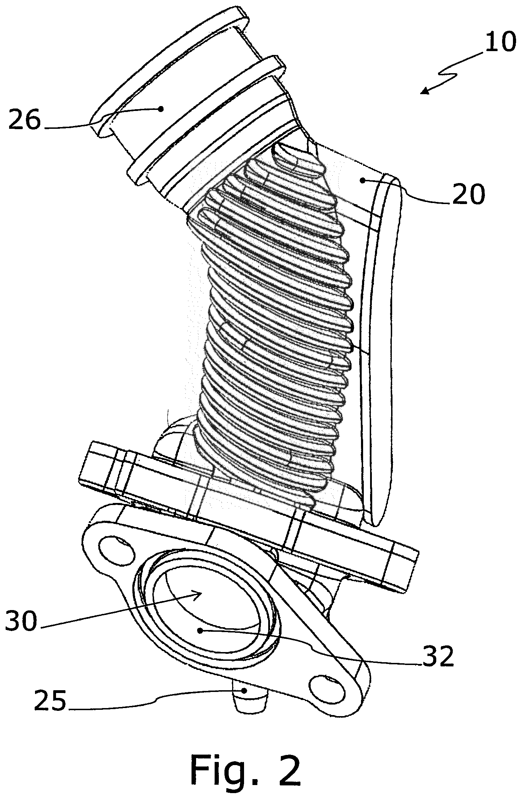

**Fig.** 2 shows an isometric view of the separator 10 with the drainpipe 25, the flow channel 20 and the outlet 26 from a second perspective. The gas can flow into the separator 10 through an inlet **30** with an inlet tube **32.** The inlet 30 is part of the separator 10.

**Fig.** 3 shows a cutaway view of the separator 10 with the inlet 30, the flow channel 20, the outlet 26, the main tube 12 and the drainpipe 25. The flow channel 20 comprises an inner wall **34** and an outer wall **36.** In the radial direction **38,** the outer wall 36 is located at a greater distance **40** from the longitudinal axis **42** of the separator 10 than the inner wall 34. The folds 14 have an inclination 18 with an angle of inclination α, wherein the angle of inclination α in particular has values between 1° and 89°, preferably values between 45° and 85° and particularly preferred values between 60° and 80°. A part **44** of the inner radial surface **46** of each fold 14 is arranged at a distance to the outer radial surface **48** of the inner wall 34 in the radial direction 38, forming openings 50. Therefore, the droplets can flow from the inner radial surface 46 of the folds 14 arranged in the shape of a bellows 16 into the flow channel 20. From the flow channel 20 the droplets can be led into the drainpipe 25 via a collecting channel **51.** The collecting channel 51 is separated from the gas flow by the inlet tube 32.

A gap **52** is formed between a final section **53** of the inlet tube 32 protruding into the main tube 12 and the inner wall 34. Droplets can flow from the inlet tube 32 and the main tube 12 to the flow channel 20. This can be advantageous for draining droplets which flow down the inner surface **54** of the inner wall 34 or hit the inner surface **56** of the inlet tube 32 and are moved further upwards with the gas flow along the inner surface 56 of the inlet tube 32. The gap 52 is arranged in radial direction around the inlet tube 32 in a range of an angle between 30° to 360°.

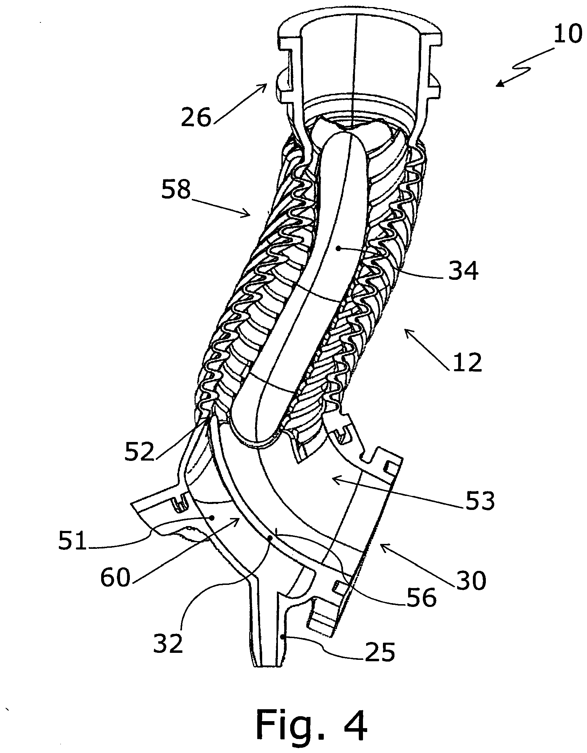

**Fig.** 4 shows a cutaway view of the separator 10 with the inlet 30 with the final section 53, the outlet 26, the collecting channel 51 and the drainpipe 25 from a further perspective. In particular, a plan view of the inner wall 34 is depicted in the figure. The main tube 12 and in particular the inner wall 34 have a curved shape **58** in order to collect the condensate which flow along the folds (14) by matching every lowest point (22) of the fold. For the same purpose the inlet tube 32 is designed with a bend **60.** Heavy droplets which cannot follow the gas flow hit the inner surface 56 of the inlet tube 32 in the bend 60 and do not enter the main tube 12. They flow through the gap 52 between the inlet tube 32 and the inner wall 34 after they have been moved along the inner surface 56 of the inlet tube 32 with the gas flow.

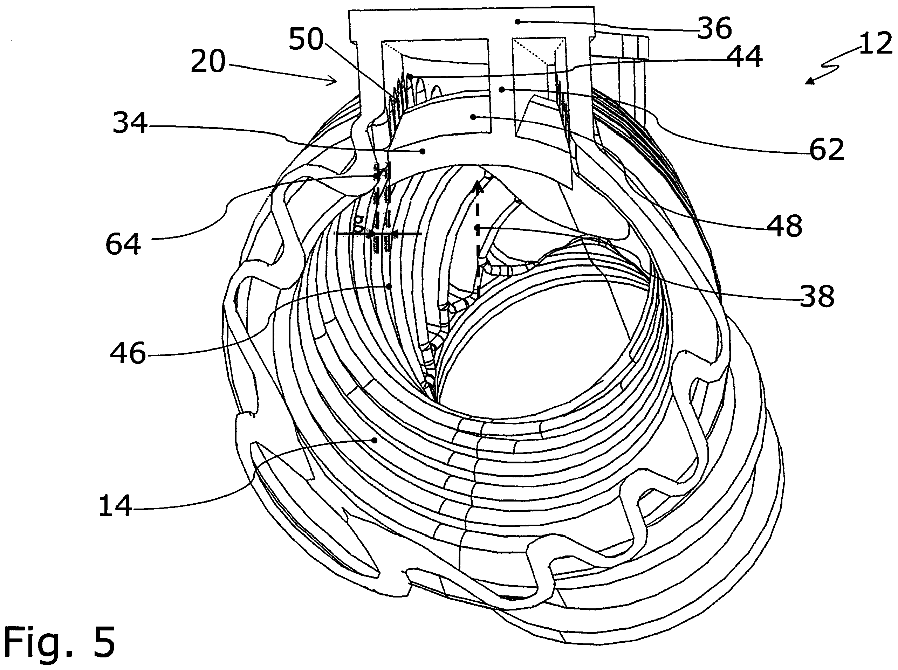

**Fig. 5** shows a cross-section through the main tube 12. The inner wall 34 and the outer wall 36 of the flow channel 20 are connected by a connecting web **62.** The connecting web 62, the inner wall 34 and the outer wall 36 are arranged in an H-shaped manner. At least a part 44 of the inner radial surface 46 of each fold 14 is arranged at a distance to the outer radial surface 48 of the inner wall 34 in the radial direction 38, forming an opening 50. Therefore, the droplets can flow from the folds 14 into the flow channel 20.

In conclusion, the invention refers to a tubular separator 10 for separating a condensate from a gas. The separator 10 comprises a main tube 12 to guide the gas and a flow channel 20. The flow channel 20 has an opening 50 leading to folds 14 of the main tube 12. The folds 14 of the main tube 12 are arranged in the shape of a bellows 16. An inner wall 34 and an outer wall 36 form parts of the flow channel 20. The inner wall 34 also forms part of the main tube 12 and separates the flow channel 20 from the main tube 12. The condensate can be directed by the outer wall 36 in the axial direction 24 of the flow channel 20.

The inner wall 34 can be connected to the end wall **64** of the folds 14 in the area of the inner wall 34. The condensate flows from the inner radial surface of the folds into the flow channel through openings 50.

In an advantage embodiment there is a gap **g** between the inner wall 34 and the end wall 64 of the folds 14 at least at one longitudinal side of the inner wall 34.

## Claims

1. Tubular separator (10) for separating a condensate from a gas, wherein the separator (10) comprises a main tube (12) having folds (14) formed in the shape of a bellows (16) and an axial inner wall (34) extending in an axial direction which forms a part of the main tube (12) for leading the gas,
**characterized by** a flow channel (20) for the condensate with a plurality of openings (50) leading to the folds, wherein the inner wall (34) separates the flow channel (20) from the main tube (12), wherein the flow channel (20) comprises an outer wall (36) for leading the condensate in the axial direction (24) of the flow channel (20), wherein in that at least a part (44) of the inner radial surface (46) of the folds (14) is arranged at a greater radial distance than the outer radial surface (48) of the inner wall (34) in the radial direction (38), forming thereby the plurality of openings (50) from the main tube (12) to the flow channel (20).

2. Tubular separator according to claim 1, **characterized in that** the inner wall (34) is connected to the outer wall (36) by a connecting web (62), wherein in the radial direction (38) the outer wall (36) is located at a greater distance (40) than the inner wall (34).

3. Tubular separator according to claim 2, **characterized in that** the inner wall (34), the outer wall (36) and the connecting web (62) are arranged in an H-shaped manner.

4. Tubular separator according to one of the previous claims, **characterized in that** at least some of the folds (14) have an inclination (18) with an angle of inclination α with respect to the vertical direction, wherein the inner wall (34) is located at the respective lowest points (22) of the folds (14).

5. Tubular separator according to one of the previous claims, **characterized in that** the inner wall (34) is smooth.

6. Tubular separator according to one of the previous claims, **characterized in that** there is a gap (52) formed between the inlet tube (32) and the inner radial surface (46) of the fold (14).

7. Tubular separator according to one of the previous claims, **characterized in that** the separator (10) comprises an inlet (30) having an inlet tube (32) leading to the main tube (12), wherein the inlet tube (32) is bent.

8. Tubular separator according to claim 7, **characterized in that** there is a gap (52) formed between the inlet tube (32) and the inner wall (34).

9. Tubular separator according to claim 7 or 8, **characterized in that** a final section (53) of the inlet tube (32) protrudes into the main tube (12) in the axial direction.

10. Tubular separator according to claims 7-9, **characterized in that** the inlet (30) has a drainpipe (25), which is fluidically connected to the flow channel (20), in particular by a collecting channel (51).

11. Tubular separator according to one of the claims 7 to 10, **characterized in that**
a. the flow channel (20) and/or
b. the inlet (30)
form separate components of the separator (10) for flexible manufacturing methods of the components.

## Patentansprüche

1. Rohrförmiger Abscheider (10) zum Abscheiden eines Kondensats aus einem Gas, wobei der Abscheider (10) ein Hauptrohr (12) mit balgförmig (16) geformten Falten (14) und einer sich in Axialrichtung erstreckenden axialen Innenwand (34) umfasst, die einen Teil des Hauptrohrs (12) zur Leitung des Gases bildet,
**gekennzeichnet durch** einen Strömungskanal (20) für das Kondensat mit einer Vielzahl von zu den Falten führenden Öffnungen (50), wobei die Innenwand (34) den Strömungskanal (20) von dem Hauptrohr (12) trennt, wobei der Strömungskanal (20) eine Außenwand (36) zur Führung des Kondensats in Axialrichtung (24) des Strömungskanals (20) umfasst, wobei insofern mindestens ein Teil (44) der inneren Radialfläche (46) der Falten (14) in einem größeren radialen Abstand als die äußere Radialfläche (48) der Innenwand (34) in der Radialrichtung (38) angeordnet ist und dadurch die Vielzahl von Öffnungen (50) vom Hauptrohr (12) zum Strömungskanal (20) bildet.

2. Rohrförmiger Abscheider nach Anspruch 1, **dadurch gekennzeichnet, dass** die Innenwand (34) mit der Außenwand (36) durch einen Verbindungssteg (62) verbunden ist, wobei die Außenwand (36) in Radialrichtung (38) einen größeren Abstand (40) als die Innenwand (34) aufweist.

3. Rohrförmiger Abscheider nach Anspruch 2, **dadurch gekennzeichnet, dass** die Innenwand (34), die Außenwand (36) und der Verbindungssteg (62) H-förmig angeordnet sind.

4. Rohrförmiger Abscheider nach einem der obigen Ansprüche, **dadurch gekennzeichnet, dass** mindestens einige der Falten (14) eine Neigung (18) mit einem Neigungswinkel α gegenüber der Vertikalrichtung haben, wobei die Innenwand (34) an den jeweils tiefsten Punkten (22) der Falten (14) angeordnet ist.

5. Rohrförmiger Abscheider nach einem der obigen Ansprüche, **dadurch gekennzeichnet, dass** die Innenwand (34) glatt ist.

6. Rohrförmiger Abscheider nach einem der obigen Ansprüche, **dadurch gekennzeichnet, dass** zwischen dem Einlassrohr (32) und der radialen Innenfläche (46) des Falzes (14) ein Spalt (52) gebildet ist.

7. Rohrförmiger Abscheider nach einem der obigen Ansprüche, **dadurch gekennzeichnet, dass** der Abscheider (10) einen Einlass (30) mit einem zum Hauptrohr (12) führenden Einlassrohr (32) umfasst, wobei das Einlassrohr (32) gebogen ist.

8. Rohrförmiger Abscheider nach Anspruch 7, **dadurch gekennzeichnet, dass** zwischen dem Einlassrohr (32) und der Innenwand (34) ein Spalt (52) gebildet ist.

9. Rohrförmiger Abscheider nach Anspruch 7 oder 8, **dadurch gekennzeichnet, dass** ein Endabschnitt (53) des Einlassrohres (32) in Axialrichtung in das Hauptrohr (12) hineinragt.

10. Rohrförmiger Abscheider nach den Ansprüchen 7 bis 9, **dadurch gekennzeichnet, dass** der Einlass (30) ein Ablaufrohr (25) hat, das mit dem Strömungskanal (20) fluidisch verbunden ist, insbesondere durch einen Ablaufkanal (51).

11. Rohrförmiger Abscheider nach einem der Ansprüche 7 bis 10, **dadurch gekennzeichnet, dass**
a. der Ablaufkanal (20) und/oder
b. der Einlass (30)
separate Komponenten des Abscheiders (10) für flexible Fertigungsverfahren der Komponenten bilden.

## Revendications

1. Séparateur tubulaire (10) destiné à séparer un condensat d'un gaz, dans lequel le séparateur (10) comprend un tube principal (12) ayant des plis (14) réalisés sous la forme d'un soufflet (16) et une paroi interne axiale (34) s'étendant dans une direction axiale qui constitue une partie du tube principal (12) pour guider le gaz,
**caractérisé par** un canal d'écoulement (20) pour le condensat avec une pluralité d'ouvertures (50) guidant vers les plis, dans lequel la paroi interne (34) sépare le canal d'écoulement (20) du tube principal (12), dans lequel le canal d'écoulement (20) comprend une paroi externe (36) pour guider le condensat dans la direction axiale (24) du canal d'écoulement (20), dans lequel au moins une partie (44) de la surface radiale interne (46) des plis (14) est disposée à une plus grande distance radiale que la surface radiale externe (48) de la paroi interne (34) dans la direction radiale (38), réalisant ainsi la pluralité d'ouvertures (50) du tube principal (12) vers le canal d'écoulement (20).

2. Séparateur tubulaire selon la revendication 1, **caractérisé en ce que** la paroi interne (34) est reliée à la paroi externe (36) par une bande de liaison (62), dans lequel la paroi externe (36) est située, dans la direction radiale (38), à une plus grande distance (40) que la paroi interne (34).

3. Séparateur tubulaire selon la revendication 2, **caractérisé en ce que** la paroi interne (34), la paroi externe (36) et la bande de liaison (62) sont arrangées en forme de H.

4. Séparateur tubulaire selon l'une quelconque des revendications précédentes, **caractérisé en ce qu'**au moins certains des plis (14) ont une inclinaison (18) selon un angle d'inclinaison α par rapport à la direction verticale, dans lequel la paroi interne (34) est située aux points les plus bas (22) respectifs des plis (14).

5. Séparateur tubulaire selon l'une quelconque des revendications précédentes, **caractérisé en ce que** la paroi interne (34) est lisse.

6. Séparateur tubulaire selon l'une quelconque des revendications précédentes, **caractérisé en ce qu'**il existe un espace (52) réalisé entre le tube d'entrée (32) et la surface radiale interne (46) du pli (14).

7. Séparateur tubulaire selon l'une quelconque des revendications précédentes, **caractérisé en ce que** le séparateur (10) comprend une entrée (30) ayant un tube d'entrée (32) guidant vers le tube principal (12), dans lequel le tube d'entrée (32) est coudé.

8. Séparateur tubulaire selon la revendication 7, **caractérisé en ce qu'il** existe un espace (52) réalisé entre le tube d'entrée (32) et la paroi interne (34).

9. Séparateur tubulaire selon la revendication 7 ou 8, **caractérisé en ce qu'**une section finale (53) du tube d'entrée (32) fait saillie dans le tube principal (12) dans la direction axiale.

10. Séparateur tubulaire selon les revendications 7 à 9, **caractérisé en ce que** l'entrée (30) a un tuyau d'évacuation (25), qui est relié fluidiquement au canal d'écoulement (20), notamment par un canal collecteur (51).

11. Séparateur tubulaire selon l'une des revendications 7 à 10, **caractérisé en ce que**
a. le canal d'écoulement (20) et/ou
b. l'entrée (30)
constituent des composants séparés du séparateur (10) pour des méthodes de fabrication flexibles des composants.
